# DEMANDE DE BREVET EUROPEEN

(11) **EP 0 715 192 A1**
(43) Date de publication de la demande: **05.06.1996**
(21) Numéro de dépôt: 95402692.8
(22) Date de dépôt: 29.11.1995
(51) Int. Cl.: G02B 6/16, G02B 6/28

(54) **Procédé de couplage entre une fibre optique multicoeurs et plusieurs fibres optiques monocoeurs**

(30) Priorité: 02.12.1994 FR 9414527
(71) Demandeur: ALCATEL N.V., NL-1077 XX Amsterdam (NL)
(72) Inventeur: Tardy, André, F-91520 Egly (FR); Jurczyszyn, Michel, F-94200 Ivry sur Seine (FR)
(74) Mandataire: Pothet, Jean Rémy Emile Ludovic

(57) **Abrégé**

La présente invention concerne un procédé de couplage entre d'une part une fibre optique multicoeurs (1) comprenant N coeurs optiques (2) (N ≧ 4), parallèles les uns aux autres et noyés dans une gaine optique commune (3), et d'autre part une pluralité de fibres optiques monocoeurs (4), comprenant chacune un coeur optique (5), entouré d'une gaine optique (6).

Selon ce procédé, le couplage est réparti en P niveaux de couplage (7, 8 ; 7', 8') (2≦P< N) comprenant chacun au moins deux fibres monocoeurs (4) et décalés longitudinalement les uns par rapports aux autres le long de la fibre multicoeurs (1). Les niveaux (7, 8 ; 7', 8') sont tels que chaque fibre (4) y appartenant est disposée parallèlement à un coeur (2) de la fibre multicoeurs (1) et en regard de ce dernier, et est rendue solidaire de la gaine optique (3) de la fibre multicoeurs (1) de manière à réaliser un couplage latéral par ondes évanescentes.

## Description

La présente invention concerne un procédé de couplage entre une fibre optique multicoeurs et plusieurs fibres optiques monocoeurs.

On entend par fibre optique multicoeurs une fibre optique comprenant N coeurs optiques (N étant supérieur ou égal à 4), parallèles les uns aux autres, ces N coeurs étant noyés dans une gaine optique commune, la majorité des rayons lumineux transmis par la fibre multicoeurs étant guidée dans les N coeurs de cette dernière. De manière classique, chacun des N coeurs de la fibre multicoeurs a un diamètre de quelques microns (7 à 10 µm en général) et est disposé sur un cercle de rayon environ égal à 40 µm à l'intérieur de la gaine optique, celle-ci ayant un diamètre extérieur de 125 µm.

Une fibre dite monocoeur est une fibre optique classique comprenant un coeur optique entouré coaxialement d'une gaine optique, la majorité des rayons lumineux transmis par la fibre monocoeur étant guidée dans le coeur de cette dernière. Le diamètre du coeur d'une telle fibre est également d'environ 7 à 10 µm, le diamètre extérieur de la gaine optique étant de 125 µm.

Bien entendu, aussi bien les fibres monocoeurs que les fibres multicoeurs sont entourées d'au moins une couche de protection en une résine adaptée.

Pour effectuer le couplage d'une fibre multicoeurs du type de celle décrite précédemment avec plusieurs fibres monocoeurs, notamment afin d'effectuer des dérivations, des raccordements en bout de ligne, etc..., la solution couramment envisagée consiste à réaliser le couplage au niveau d'une section d'extrémité de la fibre multicoeurs par raccordement en bout d'un ou de plusieurs des coeurs de la fibre multicoeurs aux coeurs des fibres monocoeurs. Une telle solution pour le couplage d'une fibre à deux coeurs avec deux fibres monocoeurs à l'aide d'un élément intermédiaire est décrite par exemple dans l'article intitulé "Single-core to twin-core fibre connector" paru dans la revue Electronics Letters du 15 Août 1991, Vol. 27, N°17.

Cette solution n'est pas satisfaisante dès que la fibre multicoeurs à coupler comprend au moins quatre coeurs. Compte tenu de l'encombrement des fibres monocoeurs, dont le diamètre extérieur est égal à celui de la fibre multicoeurs, un tel raccordement en extrémité est en pratique complexe à effectuer sans l'utilisation d'un dispositif intermédiaire (tube de couplage, guide d'ondes plan, etc...) ; or la précision d'alignement entre le dispositif intermédiaire et les fibres, nécessaire à l'obtention du couplage souhaité, et la complexité d'usinage du dispositif intermédiaire rendent cette solution complexe et onéreuse.

Par ailleurs, cette solution ne permet pas d'effectuer simplement des dérivations, c'est-à-dire de ne coupler que certains seulement des coeurs de la fibre multicoeurs : puisque le couplage est effectué en extrémité, l'interruption de la ligne de transmission optique est nécessaire et sa reconstitution au niveau des coeurs non couplés est délicate.

On pourrait, afin de pallier ces inconvénients, songer à appliquer une solution alternative connue pour effectuer le couplage entre elles de deux fibres monocoeurs. Cette solution consiste à effectuer un couplage latéral par ondes évanescentes, et est décrite notamment dans l'article intitulé "Fabrication of an access coupler with single-strand multimode fibre waveguides" paru dans la revue Applied Optics de Novembre 1976, Vol. 15, N°11. Dans cette solution, les deux fibres monocoeurs à coupler sont rendues solidaires l'une de l'autre sur une longueur d'interaction fonction du couplage souhaité.

Cette technique n'est pas applicable aux fibres multicoeurs car, encore pour des raisons d'encombrement et d'espace disponible, il n'est pas possible de disposer au même endroit toutes les fibres individuelles autour de la fibre multicoeurs.

La présente invention a donc pour objet de mettre au point un procédé de couplage entre une fibre optique multicoeurs et plusieurs fibres optiques monocoeurs simple à mettre en oeuvre, reproductible, permettant d'effectuer des dérivations partielles, tout en conservant les propriétés optiques et mécaniques des fibres multicoeurs.

La présente invention propose à cet effet un procédé de couplage entre d'une part une fibre optique multicoeurs comprenant N coeurs optiques, N étant supérieur ou égal à 4, parallèles les uns aux autres, chacun desdits coeurs étant noyé dans une gaine optique commune, et d'autre part une pluralité de fibres optiques monocoeurs, comprenant chacune un coeur optique, entouré d'une gaine optique,
caractérisé en ce que ledit couplage est réparti en P niveaux de couplage, P étant strictement inférieur à N et supérieur ou égal à 2, comprenant chacun au moins deux fibres optiques monocoeurs, et décalés longitudinalement les uns par rapports aux autres le long de ladite fibre optique multicoeurs, lesdits niveaux étant tels que chacune desdites fibres y appartenant est disposée parallèlement à l'un desdits coeurs de ladite fibre multicoeurs et en regard de ce dernier, et est rendue solidaire de la gaine optique de ladite fibre multicoeurs sur une longueur dite longueur de couplage, de manière à réaliser un couplage latéral par ondes évanescentes entre lesdits coeurs desdites fibres monocoeurs et ceux de ladite fibre multicoeurs.

Le procédé selon l'invention rend possible le couplage par ondes évanescentes en évitant les problèmes d'encombrement autour de la fibre optique multicoeurs, sans usinage excessif susceptible de dégrader les propriétés optiques et mécaniques des fibres monocoeurs.

Par ailleurs, par rapport à la solution de couplage d'extrémité, la solution de l'invention n'interrompt pas les lignes optiques et permet donc d'effectuer des dérivations individuelles sans inconvénient pour la transmission au niveau des autres coeurs de la fibre multicoeurs.

Le procédé selon l'invention a en outre l'avantage de permettre un couplage bidirectionnel.

De manière avantageuse, une opération d'usinage des fibres monocoeurs, destinée à éliminer une partie de leur gaine optique sur la longueur de couplage, et ce afin de diminuer, sur cette longueur, l'épaisseur de leur gaine optique, est effectuée avant de réaliser le couplage.

Cette opération permet d'améliorer le couplage en rapprochant le coeur des fibres monocoeurs de ceux de la fibre multicoeurs.

L'usinage des gaines optiques des fibres monocoeurs peut être effectué à l'aide d'un fil diamanté. Etant donné que le nombre de couplages par niveau est inférieur au nombre de coeurs de la fibre multicoeurs, il n'est nécessaire de réaliser au niveau de chacune des fibres monocoeurs qu'une seule surface courbe, puisque l'espace disponible autour de la fibre multicoeurs est suffisant pour loger toutes les fibres d'un même niveau sans opération d'usinage autre que celle destinée à rapprocher leurs coeurs de leur surface extérieure. Ainsi, l'usinage peut être effectué en une seule opération.

Selon une autre caractéristique avantageuse du procédé selon l'invention, une opération d'usinage de la gaine optique de la fibre multicoeurs, destinée à éliminer une partie de cette dernière sur la longueur de couplage en regard de chacun des niveaux, et ce afin de diminuer, sur cette longueur, l'épaisseur de cette gaine optique, est effectuée avant de réaliser le couplage.

Cet usinage permet de rapprocher les coeurs à coupler de la fibre multicoeurs de la surface extérieure de cette dernière, et donc de réduire la diaphonie qui pourrait apparaître si une épaisseur de gaine trop importante séparait les coeurs de la fibre multicoeurs des coeurs des fibres monocoeurs ; en effet, si tel était le cas, une partie de l'énergie couplée pourrait se disperser dans la gaine de la fibre multicoeurs et perturber la transmission ou le couplage au niveau des autres coeurs de cette dernière.

L'usinage de la gaine optique de la fibre multicoeurs peut être effectué par exemple par attaque locale à l'aide d'acide fluorhydrique.

Selon une première variante de mise en oeuvre du procédé selon l'invention, la solidarisation des fibres optiques monocoeurs à la fibre optique multicoeurs est mécanique et effectuée au moyen de mors de maintien exerçant sur chacune des fibres monocoeurs une force de pression variable, de manière à permettre un couplage variable.

Les forces de pression appliquées peuvent être indépendantes d'un coeur à l'autre de la fibre multicoeurs.

Un tel couplage est facilité par le fait que la pression exercée permet d'assurer une augmentation localisée, au niveau de la zone où elle est appliquée, de l'indice de réfraction des gaines en contact, de sorte que le couplage s'effectue plus aisément.

En outre, le couplage réalisé peut être intermittent, c'est-à-dire être interrompu lorsque cela est rendu nécessaire en relâchant la pression exercée au niveau des coeurs où le couplage doit être interrompu.

Selon un perfectionnement de ce mode de mise en oeuvre, on peut chauffer localement les fibres à coupler afin d'assurer une légère déformation de leurs surfaces en contact et obtenir ainsi un contact intime entre elles, améliorant l'efficacité du couplage.

Selon une deuxième variante de mise en oeuvre du procédé selon l'invention, la solidarisation des fibres optiques monocoeurs à la fibre optique multicoeurs est effectuée par soudage, notamment moyen d'un laser CO₂.

Grâce à cette méthode, le couplage obtenu est très stable et aisément reproductible. La puissance et la focalisation du faisceau laser sont dimensionnées de manière à assurer un chauffage très localisé pour ne réaliser que le couplage souhaité.

D'autres caractéristiques et avantages de la présente invention apparaîtront dans la description suivante de plusieurs modes de mise en oeuvre du procédé selon l'invention, donnés à titre illustratif et nullement limitatif.

Dans les figures suivantes :
- la figure 1 représente en coupe transversale une fibre optique multicoeurs à 6 coeurs,
- la figure 2 illustre le couplage effectué selon la première variante du procédé de l'invention,
- la figure 3 illustre le couplage effectué selon la deuxième variante du procédé de l'invention,
- la figure 4 est une coupe longitudinale selon la ligne IV-IV des figures 2 et 3 illustrant le principe du couplage par ondes évanescentes,
- la figure 5 illustre schématiquement l'opération d'usinage des fibres monocoeurs.

Dans toutes ces figures, les éléments communs portent les mêmes numéros de référence.

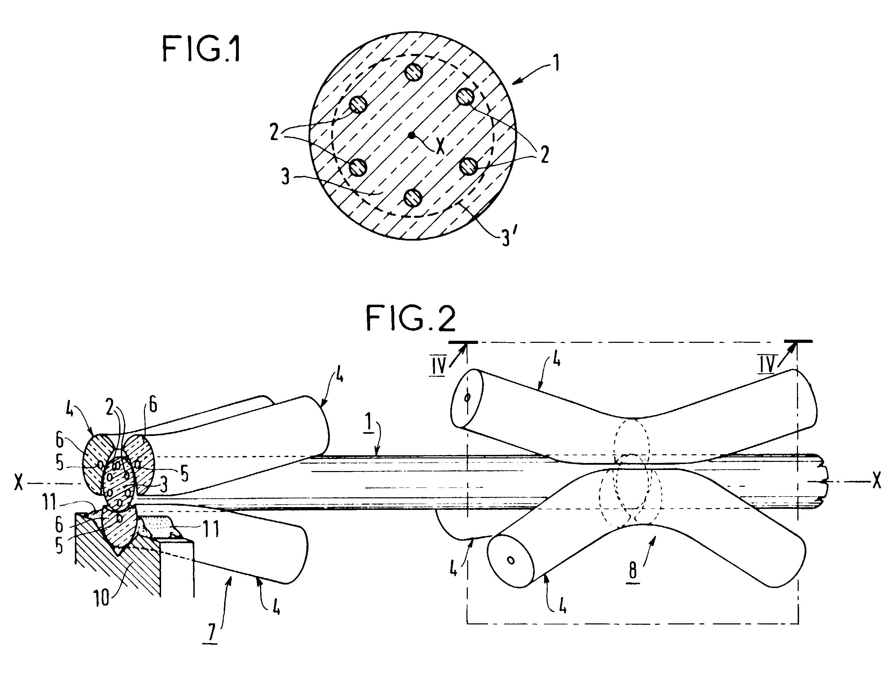

On voit en coupe transversale en figure 1, de manière schématique, une fibre multicoeurs 1 comprenant six coeurs optiques 2 noyés dans un gaine optique commune 3. Les coeurs optiques 2 ont chacun un diamètre de 7 à 10 µm, et sont disposés sur un cercle de rayon environ égal à 40 µm à l'intérieur de la gaine optique 3, celle-ci ayant un diamètre extérieur de 125 µm. Les coeurs optiques 2 servent à guider la majorité des ondes lumineuses transmises par la fibre multicoeurs 1. Pour cela, par exemple, l'indice de réfraction de la gaine optique 3 est inférieur à l'indice de réfraction des coeurs 2.

Afin d'améliorer le couplage de la fibre multicoeurs 1 à des fibres optiques monocoeurs, l'épaisseur de la gaine optique 3 de la fibre multicoeurs 1 au-delà des coeurs 2 peut être réduite par un usinage approprié, par exemple par attaque à l'acide fluorhydrique de la gaine optique 3. Cet usinage est effectué sur la longueur de couplage nécessaire. On a représenté en trait interrompu en figure 1 le contour 3' de la gaine optique 3 obtenu après usinage.

On voit en figure 2, de manière schématique, un couplage réalisé, selon une première variante de l'invention, entre d'une part trois des coeurs optiques 2 de la fibre optique multicoeurs 1 usinée comme décrit précédemment, et d'autre part trois fibres optiques monocoeurs 4, comprenant chacune un coeur optique 5 de diamètre compris par exemple entre 7 et 10 µm, pour guider la majorité des ondes lumineuses, entouré d'une gaine optique 6 de diamètre extérieur sensiblement égal à 125 µm.

Plus précisément, la figure 2 montre un niveau de couplage 7 selon l'invention, c'est-à-dire un ensemble de plusieurs fibres optiques monocoeurs 4 (trois dans l'exemple représenté) couplées à la fibre optique multicoeurs 1. Au sein de ce niveau de couplage, la gaine optique 6 des fibres optiques monocoeurs 4 a été usinée afin de rapprocher les coeurs 5 de la surface extérieure de la fibre multicoeurs 1. Chacune des fibres optiques monocoeurs 4 du niveau de couplage 7 est disposée parallèlement à l'un des coeurs 2 de la fibre multicoeurs 1 sur une longueur prédéterminée, dite longueur de couplage, nécessaire pour que le couplage par ondes évanescentes entre les ondes lumineuses véhiculées par les coeurs 2 et 5 puisse se produire. Par exemple, la longueur de couplage est inférieure à 10 mm lorsque la distance entre les coeurs à coupler est de l'ordre de 10 µm.

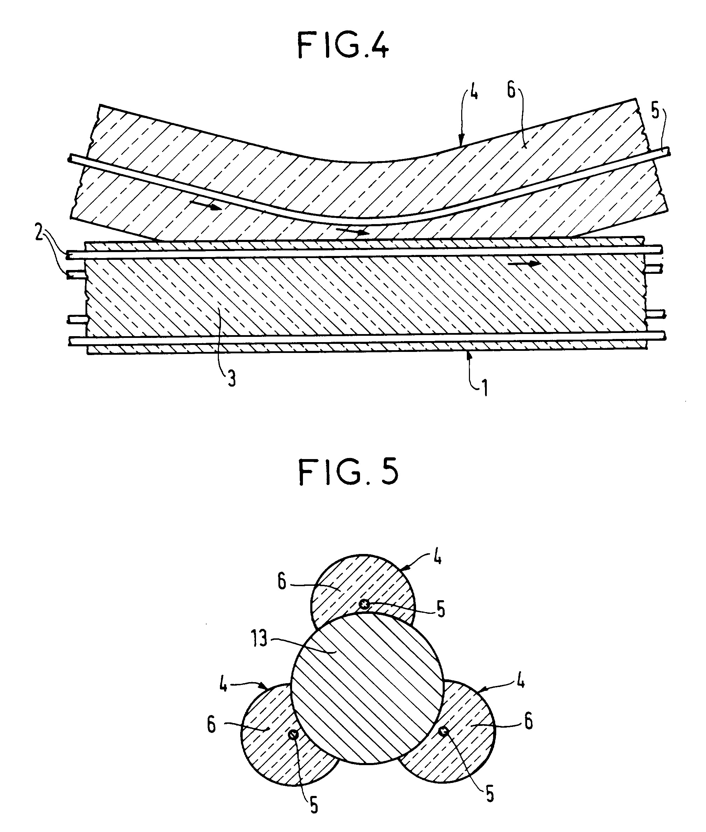

La figure 4 montre une coupe longitudinale selon la ligne IV-IV de la figure 2 illustrant le couplage par ondes évanescentes tel qu'il se produit au sein du niveau de couplage 7.

L'usinage des gaines optiques 6 et de la gaine optique 3 permet de rapprocher les coeurs 2 de la fibre multicoeurs 1 des coeurs 5 des fibres monocoeurs 4, et donc de réduire la diaphotie qui pourrait apparaître si une épaisseur de gaine trop importante les séparait.

Afin de rendre les fibres monocoeurs 4 solidaires de la fibre multicoeurs 1 sur la longueur de couplage souhaitée, on utilise, dans cette première variante, des mors de maintien 10 (un seul de ces mors de maintien a été représenté en figure 2 pour des raisons de clarté), appartenant par exemple à un mandrin (non représenté). Chaque mors de maintien 10 applique à la fibre 4 associée, une fois l'orientation angulaire de cette dernière par rapport à la fibre multicoeurs 1 réglée, une force de pression contre la fibre multicoeurs 1 qui permet d'assurer le couplage, cette force de pression pouvant être distincte et indépendante d'une fibre 4 à l'autre au sein du niveau de couplage 7, de sorte que le coefficient de couplage est variable et n'est pas nécessairement identique entre les différentes fibres 4, ce qui confère au procédé selon l'invention une grande flexibilité.

En outre, au niveau de chaque mors de maintien 10, un milieu intermédiaire 11 d'indice de réfraction proche de celui de la silice constituant la gaine optique 6 peut être interposé afin de limiter les pertes optiques.

Le contrôle de l'intensité de la force de serrage au niveau de chaque mandrin 10, et celui de l'énergie lumineuse transmise permettent de régler les paramètres du couplage souhaité, et notamment le coefficient de couplage à un niveau requis.

Dans cette première variante, le couplage est en outre facilité par le fait que la force de pression exercée sur les fibres entraîne localement une augmentation de l'indice de réfraction à la surface des gaines optiques en contact.

Afin d'améliorer le couplage, on peut chauffer localement les fibres monocoeurs 4 et la fibre multicoeurs 1 au niveau de la zone à coupler afin d'assurer une légère déformation de leurs surfaces en contact et d'obtenir ainsi un contact intime entre elles, améliorant l'efficacité du couplage.

On voit par ailleurs en figure 2, outre le niveau de couplage 7 qui vient d'être décrit, un autre niveau de couplage 8, identique dans sa conception au niveau de couplage 7, et décalé longitudinalement le long de l'axe X de la fibre multicoeurs 1 par rapport au niveau de couplage 7.

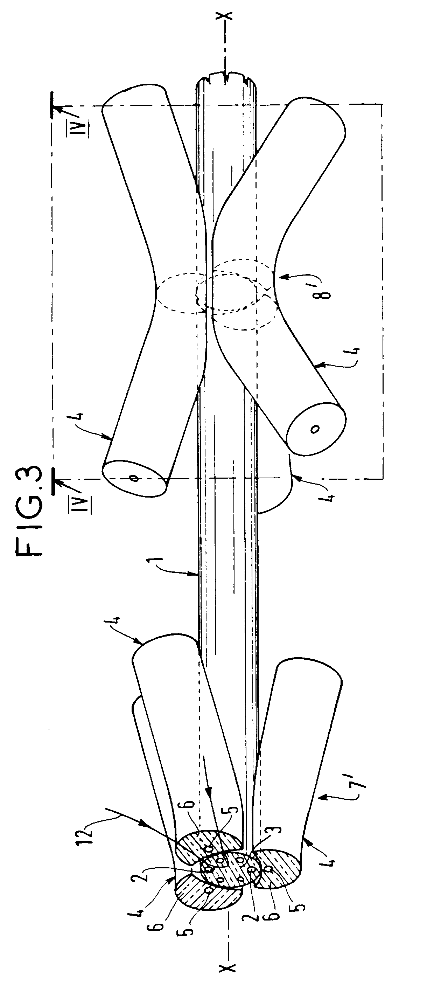

La figure 3 montre deux niveaux de couplage 7' et 8' selon une deuxième variante de la présente invention, les niveaux 7' et 8' étant décalés longitudinalement l'un par rapport à l'autre le long de l'axe X. La différence entre les niveaux de couplage 7' et 8' et les niveaux de couplage 7 et 8 réside dans le fait que la solidarisation des fibres optiques monocoeurs 4 à la fibre optique multicoeurs 1 est effectuée par soudage localisé, par exemple moyen d'un rayonnement laser CO₂, ce qui permet d'assurer un couplage très stable et reproductible.

En pratique, pour assurer la solidarisation, on illumine, de préférence de manière impulsionnelle, la zone à solidariser au moyen d'un faisceau laser 12 dont la puissance et la focalisation sont dimensionnées pour assurer un chauffage localisé au niveau de la fibre monocoeur 4 concernée et ne pas perturber les autres coeurs 2. On obtient ainsi une fusion partielle des gaines 3 et 6 à ce niveau, et par conséquent la solidarisation souhaitée.

Afin de maintenir les fibres pendant la solidarisation par soudage, on peut utiliser des mors de maintien tels que ceux représentés en figure 2. Les mors de maintien sont éliminés une fois le soudage réalisé.

Ici encore, la force de serrage exercée par le mors de maintien ainsi que l'énergie lumineuse transmise servent à régler les paramètres de couplage de sorte que le couplage, permanent, obtenu après soudage ait les caractéristiques requises.

La figure 4 représente également une coupe longitudinale selon la ligne IV-IV de la figure 3.

On a représenté en figure 5, de manière très schématique, un procédé permettant d'effectuer l'usinage des gaines 6 des fibres optiques monocoeurs 4. Selon ce procédé, on peut usiner trois fibres monocoeurs 4 à la fois, à l'aide d'un seul fil diamanté 13 cylindrique ayant sensiblement le même diamètre extérieur que la fibre optique multicoeurs 1 usinée comme représenté en figure 1. On effectue l'usinage en déplaçant longitudinalement de fil diamanté 13 de sorte qu'un frottement entre ce dernier et les gaines optiques 6 des fibres monocoeurs 4 se produise, jusqu'à ce que la surface de ces gaines optiques 6 en contact avec le fil diamanté 13 épouse sensiblement la surface extérieure de ce dernier.

Cet usinage peut être réalisé simultanément sur autant de fibres monocoeurs 4 que nécessaire, le nombre maximal de fibres 4 pouvant être usinées simultanément étant limité par l'encombrement autour de la fibre optique multicoeurs 1.

Bien entendu, la présente invention n'est pas limitée aux modes de réalisation qui viennent d'être décrits.

En premier lieu, l'invention s'applique à des niveaux de couplage comprenant un nombre quelconque de fibres optiques monocoeurs, ce nombre étant de préférence mais non nécessairement inférieur au nombre de coeurs de la fibre optique multicoeurs afin d'éviter, le cas échéant, les problèmes d'encombrement autour de cette dernière, et supérieur ou égal à 2.

Par ailleurs, il est possible, selon l'invention, de réaliser moins de couplages qu'il n'y a de coeurs dans la fibre multicoeurs, lorsque par exemple on souhaite effectuer des dérivations.

D'autre part, le nombre de niveaux de couplage, tout en étant inférieur au nombre de coeurs de la fibre optique multicoeurs et au moins supérieur à 2, peut être quelconque.

En outre, la solidarisation des fibres monocoeurs au sein de chaque niveau de couplage peut être effectué par tout moyen adapté, et pas nécessairement au moyen de mors de maintien ou par soudage.

Les fibres monocoeurs à coupler sont disposées en périphérie de la fibre multicoeurs, leur disposition étant fonction de la géométrie de cette dernière, et notamment de la position des coeurs de cette dernière à l'intérieur de sa gaine optique.

Enfin, on pourra remplacer tout moyen par un moyen équivalent sans sortir du cadre de l'invention.

## Revendications

1. Procédé de couplage entre d'une part une fibre optique multicoeurs (1) comprenant N coeurs optiques (2), N étant supérieur ou égal à 4, parallèles les uns aux autres, chacun desdits coeurs étant noyé dans une gaine optique commune (3), et d'autre part une pluralité de fibres optiques monocoeurs (4), comprenant chacune un coeur optique (5), entouré d'une gaine optique (6),
caractérisé en ce que ledit couplage est réparti en P niveaux de couplage (7, 8 ; 7', 8'), P étant strictement inférieur à N et supérieur ou égal à 2, comprenant chacun au moins deux fibres optiques monocoeurs (4), et décalés longitudinalement les uns par rapport aux autres le long de ladite fibre optique multicoeurs (1), lesdits niveaux (7, 8 ; 7', 8') étant tels que chacune desdites fibres (4) y appartenant est disposée parallèlement à l'un desdits coeurs (2) de ladite fibre multicoeurs (1) et en regard de ce dernier, et est rendue solidaire de la gaine optique (3) de ladite fibre multicoeurs (1) sur une longueur dite longueur de couplage, de manière à réaliser un couplage latéral par ondes évanescentes entre lesdits coeurs (5) desdites fibres monocoeurs (4) et ceux de ladite fibre multicoeurs (1).

2. Procédé selon la revendication 1 caractérisé en ce qu'une opération d'usinage desdites fibres monocoeurs (4), destinée à éliminer une partie de leur gaine optique (6) sur ladite longueur de couplage, et ce afin de diminuer, sur cette longueur, l'épaisseur de ladite gaine optique, est effectuée avant de réaliser ledit couplage.

3. Procédé selon la revendication 2 caractérisé en ce que l'usinage desdites gaines optiques desdites fibres monocoeurs est effectué à l'aide d'un fil diamanté (13).

4. Procédé selon l'une des revendications 1 à 3 caractérisé en ce qu'une opération d'usinage de la gaine optique (3) de ladite fibre multicoeurs, destinée à éliminer une partie de cette dernière sur ladite longueur de couplage en regard de chacun desdits niveaux (7, 8 ; 7', 8'), et ce afin de diminuer, sur cette longueur, l'épaisseur de ladite gaine optique, est effectuée avant de réaliser ledit couplage.

5. Procédé selon la revendication 4 caractérisé en ce que l'usinage de ladite gaine optique de la fibre multicoeurs est effectué par attaque locale à l'aide d'acide fluorhydrique.

6. Procédé selon l'une des revendications 1 à 5 caractérisé en ce que la solidarisation desdites fibres optiques monocoeurs à ladite fibre optique multicoeurs est mécanique et effectuée au moyen de mors de maintien (10) exerçant sur chacune desdites fibres monocoeurs (4) une force de pression variable, de manière à permettre un couplage variable.

7. Procédé selon l'une des revendications 1 à 5 caractérisé en ce que la solidarisation desdites fibres optiques monocoeurs à ladite fibre optique multicoeurs est effectuée par soudage.

8. Procédé selon la revendication 7 caractérisé en ce que ledit soudage est effectué au moyen d'un laser CO₂ (12).

9. Procédé selon l'une des revendications 1 à 6 caractérisé en ce qu'un milieu intermédiaire (11) d'indice de réfraction proche de celui des gaines optiques (3, 6) desdites fibres optiques monocoeurs et de ladite fibre optique multicoeurs est interposé entre ces dernières sur ladite longueur de couplage.
